# EUROPEAN PATENT APPLICATION

(11) **EP 3 766 739 A1**
(43) Date of publication of application: **20.01.2021**
(21) Application number: 20150029.5
(22) Date of filing: 02.01.2020
(51) Int. Cl.: B60R 13/10

(54) **A DEVICE FOR OBSCURING VEHICLE NUMBER PLATES AND THE LIKE**

(30) Priority: 02.01.2019 GB 201900036
(71) Applicant: Morgan, Richard, Abercynon, South Wales CF45 4EP (GB); Furlong, David, Abercynon, South Wales CF45 4EP (GB)
(72) Inventor: MORGAN, Richard, Abercynon, South Wales CF45 4EP (GB)
(74) Representative: Murgitroyd & Company

(57) **Abstract**

A device comprises a rectangular panel 10 having a front face, a rear face, opposite end edges and an array of suction cups 11 disposed on the rear face adjacent respective end edges of the panel 10. In use, the device can be used to temporarily obscure the characters of the registration number given on the number, license or registration plate of vehicle, so that the registration number of the vehicle cannot be determined. The array of suction cups 11 help to ensure that at least one suction cup 11 at each end of the device remains properly adhered to the vehicle.

## Description

This invention relates to a device which is particularly, but not solely, suited for obscuring the number, license or registration plate of a road vehicle.

There is often a need to obscure the number, license or registration plate of a road vehicle, for example when towing or transporting a road vehicle on another road vehicle, or when advertising a vehicle for sale. Generally, this is achieved by adhering a strip of tape to the number plate etc., so as to obscure some or all of the underlying letters and/or numbers. A disadvantage of this arrangement is that it looks unsightly and the tape may not adhere to the plate correctly, especially if it is wet or raining. Also, the tape can damage or leave a residue on the number plate etc., when it is removed.

Devices for obscuring vehicle number plates are known. GB238545.7 discloses one such device which comprises an LCD screen incorporated into a layer of the number plate at the time of manufacture. In use, the LCD screen can be energized to become opaque, thereby obscuring the underlying letters and/or numbers. Clearly, this arrangement is expensive, especially considering that the number of occasions when a number plate needs to be obscured are rare and that the device cannot be transferred between vehicles.

With the foregoing in mind I have now devised a device for obscuring vehicle number plates and the like.

In accordance with the present invention, there is provided a device comprising a rectangular panel having a front face, a rear face and opposite side edges, wherein a plurality of suction cups are disposed on the rear face adjacent said respective side edges of the panel.

In use, the device can be fastened to a vehicle number plate by aligning it over the letters and/or numbers and pressing it in-situ, so as to cause the suction cups to compress and adhere to the front surface of the number plate. The provision of a plurality of suction cups adjacent each side edge ensures that at least one suction cup at each side edge adheres firmly to the front surface of the underlying number plate. In some instances, there may be fasteners or raised letters and/or numbers on the number plates, which may prevent one of the suction cups from sufficiently adhering to the number plate and it will be appreciated that the provision of a plurality of suction cups avoids this problem.

The rectangular panel may be elongate, with the suction cups being disposed at respective opposite ends thereof.

The rectangular panel may be square, with the suction cups being disposed adjacent respective opposite sides thereof.

The device may be formed as a one-piece moulding of plastics or elastomeric material.

The panel may be formed of a flexible material.

The plurality of suction cups adjacent each side edge may be arranged in a group or in an array, for example of four suction cups. However, it will be appreciated that any number of suction cups greater than one may be provided adjacent each side edge of the number plate.

At least one further suction cup may be disposed at a point intermediate opposite ends of the panel. This further suction cups helps to keep the device securely fastened in-situ, especially in the embodiment where the panel is formed of a flexible material. It will be appreciated that any number of further suction cups may be provided intermediate opposite ends of the panel. The or each further suction cup may be of a larger diameter than the first-mentioned suction cups.

A lip may extend from the rear face of the panel. The lip helps to alleviate the risk that air turbulence may lift the device away from the number plate.

The lip may extend longitudinally adjacent an edge of the panel and it may extend around the periphery of the entire panel.

It will be appreciated that a device in accordance with the present invention may be fastened over the number plate of the road vehicle which is being transported or towed, so that the registration of the vehicle cannot be seen.

In one embodiment, the front face of the panel may be blank.

In another embodiment, the front face of the panel may be provided with indicia, such as a logo of a vehicle manufacturer and/or letters and/or numbers, such as the words "ON TOW", "FOR SALE" or a temporary vehicle registration number such as the kind used by traders.

It will be appreciated that a device in accordance with the present invention may be fastened over the number plate of a road vehicle which is being sold, either to advertise the name of the garage or a vehicle manufacturer and/or to obscure the vehicle's registration to prevent it being cloned when pictures of the vehicle are advertised publicly. It will be appreciated that the device could also be adhered directly to the vehicle, for example if has not yet been fitted with a number plate.

Preferably the device comprises at least one formation on the plate, which acts as a handle to facilitate removal of the device from the number plate. The formation may comprise a tab. Formations may be provided on said side edges adjacent the suction cups.

Markings or other indicative formations may be provided on the front surface of the plate on the opposite side thereof to the suction cups, so as to indicate the location of where the suction cups need to be compressed against the underlying number plate.

In summary, the present invention provides a device which comprises a rectangular panel having a front face, a rear face, opposite end edges and an array of suction cups disposed on the rear face adjacent respective end edges of the panel. In use, the device can be used to temporarily obscure the characters of the registration number given on the number, license or registration plate of vehicle, so that the registration number of the vehicle cannot be determined. The array of suction cups help to ensure that at least one suction cup at each end of the device remains properly adhered to the vehicle.

An embodiment of the present invention will now be described by way of an example and with reference to the accompanying drawings, in which:

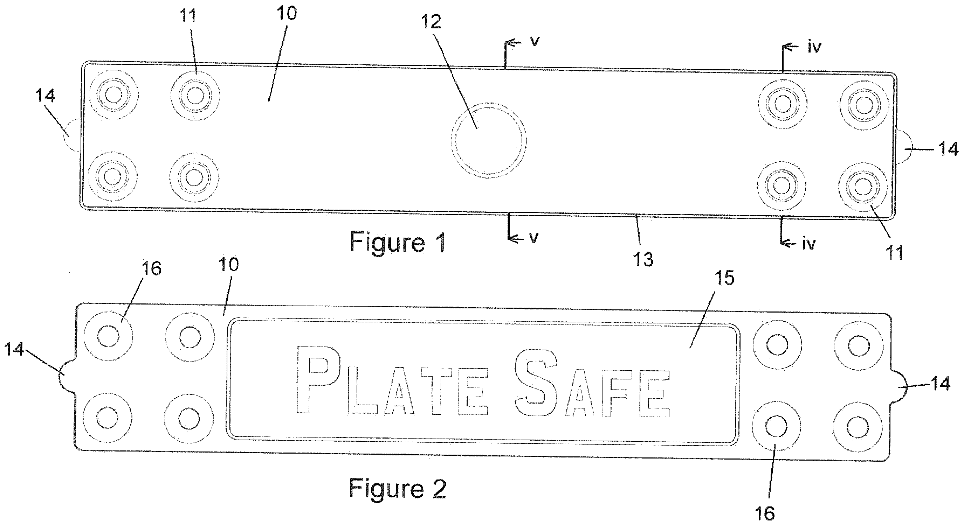

Figure 1 is a rear view of a device in accordance with the present invention for obscuring a vehicle number plate;
Figure 2 is a rear view of the device of Figure 1;

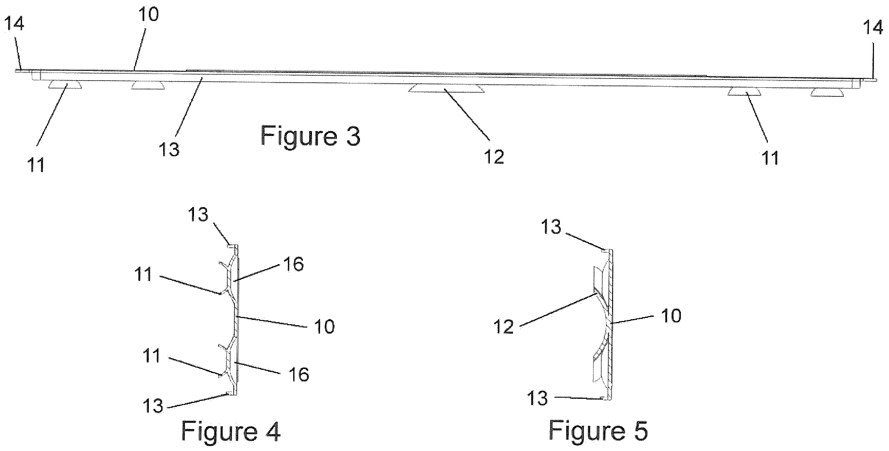

Figure 3 is a side view of the device of Figure 1;
Figure 4 is a sectional view along the line iv-iv of Figure 1; and
Figure 5 is a sectional view along the line v-v of Figure 1.

Referring to the drawings, there is shown a device in accordance with the present invention for obscuring vehicle number plates which is formed as a one-piece moulding of a flexible elastomeric material. The device comprises an elongate rectangular panel 10 having a front face, a rear face and opposite end edges. An array of four of suction cups 11 are disposed on the rear face of the rectangular panel 10 adjacent the respective end edges thereof. Circular recessed formations 16 are provided on the front surface of the plate 10 on the opposite side thereof to the suction cups 11.

A further suction cup 12 of larger diameter than the end suction cups 11 is disposed on the rear face of the rectangular panel 10 at a point intermediate opposite ends of the panel 10. A lip 13 extends from the rear face of the panel 10 around the periphery of thereof. A tab 14 extends outwardly from each opposite end edge of the panel 10.

The central region of the front surface of the plate provides a large area 15 which may be blank or it be provided with indicia and/or one or more alphanumeric characters.

In use, the device can be fastened to the number plate of a road vehicle, for example when towing or transporting the vehicle on another road vehicle, or when advertising the vehicle for sale. The device is fastened in-situ by aligning it over the characters of the registration number given on the number plate. The suction cups 11, 12 are then compressed against the underlying number plate and the formations 16 conveniently indicate the location of where the suction cups 11 need to be compressed. The suction cups 11,12 adhere to the front surface of the number plate and the provision of four suction cups adjacent each end edge ensures that at least one suction cup 11 at each end edge adheres the device firmly to the front surface of the underlying number plate. This suction cup 12 helps to keep the device securely fastened in-situ, especially since the panel 10 is formed of a flexible material. The peripheral lip 13 helps to alleviate the risk that air turbulence may lift the device away from the number plate when the vehicle is moving.

It will be appreciated that a device in accordance with the present invention is simple and inexpensive in construction, yet reliably serves to temporarily obscure the characters of the registration number given on the number plate of vehicle, so that the registration number of the vehicle cannot be seen.

## Claims

1. A device comprising a rectangular panel having a front face, a rear face and opposite side edges, wherein a plurality of suction cups are disposed on the rear face adjacent said respective side edges of the panel.

2. A device as claimed in claim 1, in which the panel is elongate, with the suction cups being disposed at respective opposite ends thereof.

3. A device as claimed in claim 1 or 2, in which the device is formed as a one-piece moulding of plastics material.

4. A device as claimed in claim 1 or 2, in which the device is formed as a one-piece moulding of elastomeric material.

5. A device as claimed in any preceding claim, in which the panel is formed of a flexible material.

6. A device as claimed in any preceding claim, in which the plurality of suction cups adjacent each side edge are arranged in a group.

7. A device as claimed in claim 6, in which the plurality of suction cups adjacent each side edge is arranged in an array.

8. A device as claimed in any preceding claim, in which at least one further suction cup is disposed at a point intermediate opposite ends of the panel.

9. A device as claimed in any preceding claim, in which a lip extends from the rear face of the panel.

10. A device as claimed in claim 9, in which the lip extends longitudinally adjacent an edge of the panel.

11. A device as claimed in claims 9 or 10, in which the lip extends around the periphery of the entire panel.

12. A device as claimed in any preceding claim, in which the front face of the panel is provided with indicia., such as a logo of a vehicle manufacturer

13. A device as claimed in any preceding claim, in which the front face of the panel is provided with one or more alphanumeric characters.

14. A device as claimed in any of claims 1 to 11, in which the front face of the panel is blank.

15. A device as claimed in any preceding claim, comprising at least one handle formation on the plate.

16. A device as claimed in claim 15, in which the handle formation comprises a tab.

17. A device as claimed in claim 15 or 16, in which handle formations are provided on said side edges adjacent the suction cups.

18. A device as claimed in any preceding claim, in which indicative formations are provided on the front surface of the plate on the opposite side thereof to the suction cups.
